# EUROPEAN PATENT SPECIFICATION

(11) **EP 3 558 579 B1**
(45) Date of publication and mention of the grant of the patent: **29.12.2021**
(21) Application number: 17835637.4
(22) Date of filing: 15.12.2017
(51) Int. Cl.: B23K 9/20, B23K 9/235, B23K 9/32

(54) **JOINING DEVICE AND METHOD USING SUCH DEVICE WITH A PREPARATION STEP FOR THE FIRST AND/OR THE SECOND JOINING SURFACES OF THE COMPONENT AND THE JOINING ELEMENT**
VERBINDUNGSVORRICHTUNG UND VERFAHREN UNTER VERWENDUNG SOLCHER VORRICHTUNG, MIT EINEM SCHRITT ZUR HERSTELLUNG DER ERSTEN UND/ODER DER ZWEITEN VERBINDUNGSFLÄCHEN DER KOMPONENTE UND DES VERBINDUNGSELEMENTS
DISPOSITIF D'ASSEMBLAGE ET MÉTHODE UTILISANT UN TEL DISPOSITIF, AVEC UNE ÉTAPE DE PRÉPARATION POUR LES PREMIÈRE ET DEUXIÈME SURFACES D'ASSEMBLAGE DU COMPOSANT ET DE L'ÉLÉMENT D'ASSEMBLAGE

(30) Priority: 23.12.2016 DE 102016125600
(43) Date of publication of application: 30.10.2019
(73) Proprietor: Newfrey LLC, New Britain, CT 06053 (US)
(72) Inventor: EISSARA, Bah, 35394 Gießen (DE); MESCHUT, Gerson, 33098 Paderborn (DE); REIS, Christian, 35394 Gießen (DE)
(74) Representative: SBD IPAdmin
(86) International application number: PCT/EP2017/083163
(87) International publication number: WO 2018/114719

(56) References cited:
- WO-A1-93/22655
- WO-A1-2005/021201
- JP-A- S5 786 743
- JP-A- H05 232 042
- US-B2- 6 815 631

## Description

The present invention relates to a joining device and to a method of joining joining elements to components, in particular for stud welding, according to the preamble of claims 1 and 4 (see for example US 6 815 631 B2).

In the above-mentioned method, joining elements such as studs are preferably joined to components such as metal sheets such that the studs protrude perpendicularly with respect to a surface of the component. Joined arrangements of this kind can be used to fasten clips made of plastics material to the stud, for example. The clips can, for example, be used to secure lines with respect to the component, such as electric, fuel or brake lines. Generic joining methods are therefore applied in particular in the field of vehicle body construction for motor vehicles.

During stud welding, a flow of electric current is established between the joining element and the component, the joining element being raised relative to the component such that an electric arc is drawn therebetween. The electric arc leads to fusion of the opposing joining surfaces of the component and the joining element. The joining element is subsequently lowered onto the component, and therefore the electric joining current is shortcircuited. The whole fusion solidifies and the joining process is complete.

During stud bonding or stud gluing, a joining element is usually first provided with an activatable adhesive on a joining surface. The stud bonding then takes place by the adhesive being activated. The joining element and the component are subsequently pressed against one another and, finally, the adhesive is cured. This can take place by means of various external factors, in particular by heat.

It is not only the actual joining process that is responsible for the quality of joined connections of this kind. The material properties and the surface quality of the component, and optionally of the joining element as well, also play a not insignificant role in the process. This applies if the component and the joining element are manufactured from a steel. This problem exists in particular, however, if the component and the joining element are manufactured from an aluminium alloy in each case.

Changes to the characteristic properties of the workpiece become particularly noticeable in aluminium-alloy-based joined connections. Properties of these kinds can include whether the aluminium alloy is a recycled material. In addition, problems can arise with respect to uneven grain sizes on the upper layer, which can reach up to 1 mm in depth, in particular in the case of extrusion material. Such uneven grain sizes can lead to differing conductivities. As a result, this can affect the flow of current through the electric arc.

Furthermore, many components are manufactured in a casting process. This results in the problem that the surface is coated with separating agents such as waxes, oils, polysiloxanes, hydrocarbons, polymers, etc. In particular if the coating with agents of this kind is uneven over the joining surface, it is difficult to adapt joining parameters accordingly. A hydrocarbon covering can lead to pores or bubbles in the weld, thus overall to a higher porosity of the weld, which can negatively affect the strength of the weld. Alloy elements can also have an impact on weldability.

Although requests are generally made for components to have certain surface specifications, to which a joining process is then specially adapted in terms of joining parameters, in practice it is not always easy to adhere to said surface specifications.

In the field of stud welding it is known to carry out an electric arc cleaning process ("clean flash") before the actual stud welding process. This involves establishing, before the welding process, an electric arc having a small current and alternating polarity, ionising said arc on the basis of the impurities thereof, and detaching said arc from the component surface. The problem with this process is that impurities of this kind can subsequently be taken up by the other joining surface on the stud, and therefore problems with respect to consistent joined connections can also arise in this case.

In light of this, the problem addressed by the invention is that of providing an improved method for joining joining elements to components, and providing an improved joining device.

A joining device and a method of joining joining elements to components according to the present invention are defined in claims 1 and 4 respectively.

Further particular embodiments of the present invention are defined in claims 2-3 and 5-6.

When carrying out the detection method, at least one characteristic variable of the component and/or of the joining element can be detected in order to classify the component or the joining surface thereof, for example. It is preferable for at least one characteristic variable to be detected of a surface portion or of the joining surface of the component to which the joining element is to be joined. The characteristic variable can in this case relate to the material, a surface quality, a surface finish, a hydrocarbon covering on the surface, a cleanliness, or to release substances in the case of a cast workpiece; however, said variable can also include relative sizes, such as the component material with respect to the joining element material.

The focus in the following is on a preferred variant in which, exclusively, at least one characteristic variable of the component is detected. Consequently, the method relates in particular to preparing the second joining surface and to carrying out the preparation step on the second joining surface of the component. All of the following references to the preparation and to carrying out a detection method can, however, relate in the same way to corresponding variables of a joining element, unless explicitly stated otherwise.

The detection apparatuses are in each case preferably active apparatuses, in which the component is actively subjected to a physical process, a reaction thereto subsequently being sensor-detected.

Carrying out the detection makes it possible to classify the component in a subsequent evaluation step. For example, joining parameters for a subsequent joining process can be then changed or adapted depending on the classification. It is also possible, depending on the classification, to carry out a supplementary cleaning method before the joining process, which method can be for example a snow-jet method or a method using a plasma gas.

The component and the joining element are manufactured in particular from an aluminium alloy.

By means of the fluorescence measurement on the joining surface it is possible, according to the present invention, to detect coatings (oil films, fat deposits, hotmelt coverings, etc.) or impurities on the joining surface.

The problem is thus completely solved.

According to a preferred embodiment of the invention, the fluorescence measurement includes supplying the joining surface with electromagnetic generator radiation by means of a generator, such that the material(s) of a coating or covering on the joining surface is/are atomically excited, wherein an emission of response radiation, released on the basis of the material, in particular an emission of light quantums, is detected by means of a sensor.

The electromagnetic generator radiation is preferably in a frequency range that is visible to humans, in addition to UV and/or in addition to IR.

It is particularly preferable for the generator radiation to be UV radiation.

As a result, the fluorescence measurement can be carried out as radiation-induced fluorescence spectroscopy, in particular based on the interaction of electromagnetic radiation and matter. The atoms in the surface layers of the joining surface are brought up to a higher energy level as a result of the light quantums or the quantums from electromagnetic radiation. Said energy is subsequently re-released, on account of the fluorescence, in the form of radiation, in particular as radiation pulses. Different quantities of pulses are released depending on the material and the covering amount. These "counts" are counted and analysed.

A range of preliminary tests using reference coverings are also carried out during the fluorescence measurement in order to be able to subsequently carry out comparisons with actual measurements on current components, and to be able to make comparisons therewith. For example, calibrations can be stored in the fluorescence detection apparatus for this purpose, for example for specific materials of the component in combination with specific compositions of the coating or covering.

It is particularly preferable for the generator radiation used to excite the coating on the joining surface to be LED or laser radiation. A laser used for this purpose may be a solid-state laser for example, in particular of the 1M power class.

The LED radiation can be UV LED radiation.

According to the present invention, the generator and the sensor are housed in a measurement probe.

With respect to the fluorescence measurement, a measurement probe or a measurement head can have for example a diameter of from 8 mm to 40 mm, in particular 30 mm to 40 mm.

It is also advantageous for the preparation step to be carried out within a timeframe of no less than 0.1 s, and no greater than 2 s.

This results in an optimum integration of the preparation step in a joining process chain.

The preparation step can either be carried out statically, such that a measurement probe and the component are held together in a fixed relative position for the duration of the measurement or preparation time. Alternatively, it is also possible to carry out the preparation step dynamically, the preparation step being carried out during a relative movement between the component and a measurement probe.

The fluorescence measurement can also be used to evaluate cleaning methods which have been carried out beforehand. This also results in a low measurement cycle time. The dimensions of a test head or of a measurement probe can also be small.

According to the present invention, the detection apparatus is mounted on the joining head.

This results in significantly increased integration in the joining system technology. A robot can also be used to appropriately position the detection apparatus with respect to a joining surface.

It goes without saying that the features stated above, and which will be explained in the following, can not only be used in the combination stated in each case, but can also be used in other combinations, or in isolation, without departing from the scope of the present invention.

Embodiments of the invention are shown in the drawings and are explained in more detail in the following description, in which drawings:
Fig. 1 is a schematic view of a joining device according to one embodiment of the invention;
Fig. 2 shows a detail II from Fig. 1;
Fig. 3 is a graph showing count values in relation to a coating density from a fluorescence measurement on a joining surface;
Fig. 4 is a schematic view of a measurement probe for carrying out a fluorescence measurement;
Fig. 5 is a schematic view of a measurement probe for carrying out a conductivity measurement, not covered by the present invention;
Fig. 6 is a graph used for conductivity measurement showing the conductivity, hardness and tensile strength of a material as a function of temperature, not covered by the present invention;
Fig. 7 is a schematic view of an arrangement for contact resistance measurement, not covered by the present invention;
Fig. 8 is a graph showing resistance in relation to force when carrying out a contact resistance measurement method, not covered by the present invention; and
Fig. 9 is a graph showing resistance in relation to voltage when carrying out a contact resistance measurement method, not covered by the present invention.

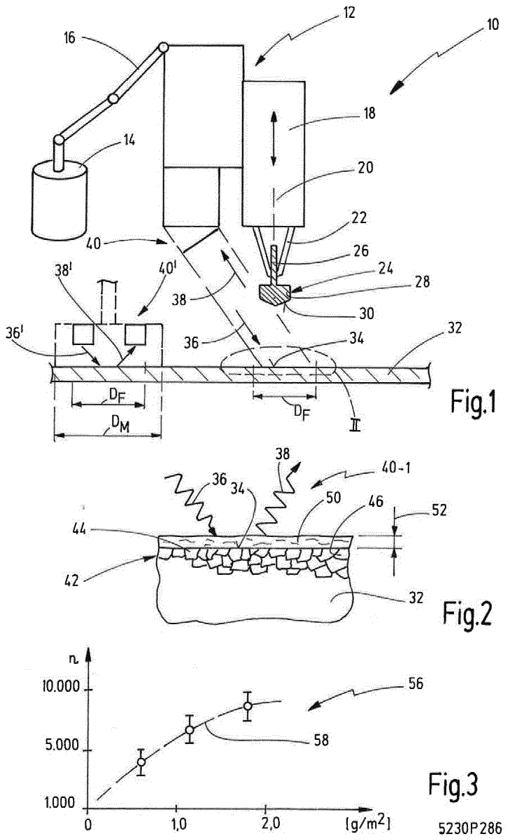

Fig. 1 schematically shows a joining device, which is generally denoted by 10. The joining device 10 comprises a joining head 12, which is preferably secured to a robotic arm 16 of a robot 14. A carriage 18 is arranged on the joining head 12 so as to be movable along a joining axis 20. A retaining apparatus 22 is formed on the carriage 18, by means of which apparatus a joining element 24 can be retained. The joining element 24 comprises a shaft portion 26 on which the joining element 24 can be retained by means of the retaining apparatus 22, and comprises a flange portion 28. A first joining surface 30 is formed on a side of the flange portion 28 that faces axially away from the shaft portion 26.

The joining element 24 can be joined to a component 32, for example a metal sheet component of a vehicle body, by means of the joining device 10. The component 32 comprises a second joining surface 34 that can be aligned with the first joining surface 30 before the joining process begins.

In the present case, the joining device is designed for stud welding; however, it can also be designed for stud bonding/stud gluing. During stud welding, the joining element 24 is lowered onto the component 32 by movement of the carriage 18. A voltage is subsequently applied between the joining element 24 and the component 32, resulting in a flow of electric current. The component 24 is then lifted back up, resulting in an electric arc being drawn. The opposing joining surfaces 30, 34 become fused to one another as a result of the electric arc. The joining element 24 is then lowered onto the component 32 again, following which the electric arc is cut off on account of the electrical short-circuit. The whole fusion solidifies, and the joining element 24 is integrally bonded to the component 32.

A stud welding process of this kind is generally known. A tip ignition process may also be used in place of the drawn-arc ignition process.

The joining element 24 and the component 32 are preferably manufactured from aluminium alloys. The joining process is carried out using specific joining parameters. The joining parameters can optionally be set, namely depending on the state in particular of the second joining surface 34 before the joining process.

Determining the state of the second joining surface 34 can be used to adapt the joining parameters or to initiate further steps before beginning the joining process, for example an additional cleaning step in which the second joining surface 34 is supplied with a physical medium, such as a plasma gas or a snow jet.

A detection apparatus 40 used to detect a state can usually work entirely passively. In the present case, the detection apparatus 40 can, however, be designed as an active detection apparatus, in which the detection apparatus 40 excites the second joining surface 34, as schematically indicated by reference sign 36, at which point a reaction occurs at the second joining surface 34, as schematically shown by reference sign 38 in Fig. 1, which can be detected by the detection apparatus 40.

The detection apparatus 40 is, as shown and according to the present invention, mounted on the joining head 12.

In an example not covered by the present invention, as also shown in Fig. 1, the detection apparatus can be designed as a detection apparatus 40' that is separate from the joining head 12.

In Fig. 1, a diameter of the second joining surface 34 is indicated by D_{F}. Preferably, a diameter D_{M}, which can be covered by the detection apparatus 40 or 40' on the surface of the component 32, is greater than the diameter D_{F}. For example, the detection apparatus 40' can comprise a measurement probe having a diameter D_{M} that is preferably greater than D_{F}.

Fig. 2 shows a detail II from Fig. 1. Here, it is schematically indicated that the component 32 can have a granular structure 42 in a surface layer, which structure can contain for example smaller grains 44 and larger grains 46.

Fig. 2 also shows that a coating or a covering 50 can be formed on the surface or on the second joining surface 34 of the component 32, which coating or covering can be for example an oil film, fat or hotmelt covering, or a covering of waxes, oils, polysiloxanes, or a covering of hydrocarbons, polymers, etc.

The materials or the composition of the coating 50 and a coating thickness 52 that is indicated schematically in Fig. 2 can have a significant impact on the above-described joining process.

Fig. 2 indicates that the excitation 36 can be for example wave-like and can excite, in particular atomically, materials of the coating 50, at which point reaction radiation 38 is subsequently released by the coating 50.

Fig. 2 thus shows, according to the present invention, a detection apparatus in the form of a fluorescence measurement apparatus 40-1.

In this case, the joining surface 34 or the coating 50 thereof is supplied with electromagnetic radiation, in particular light radiation, the constituents of the coating 50 and/or of the underlying material of the component 32 being excited and then releasing reaction radiation 38 on account of the fluorescence characteristic, which radiation is often in a different wavelength range from the excitation radiation 36.

In particular, reaction radiation pulses can be released by the coating 50 or the component 32 and can be counted.

Fig. 3 shows a graph of a count n in relation to a coating density or thickness, measured in g/m².

It can be seen that, as the density or coating thickness of the coating 50 increases on account of the larger number of atoms, which are excited on account of the excitation radiation and shifted into a higher energy state, this results in correspondingly higher counts.

The graph 56 shown in Fig. 3 can include a corresponding fluorescence curve 58, which can be linear in portions, but which moves into a saturation range, preferably based on the function of a delay element, as the coating strength increases.

Fig. 3 shows a plurality of measurement points having linear calibration portions on the fluorescence curve 58.

In order to be able to evaluate current second joining surfaces 34, the joining surface is preferably calibrated with respect to the material of the component 32 and/or the material or the main constituent of the coating 50. This makes it possible to compare current joining surfaces 34 with previously measured reference joining surfaces, on the basis of which the detection apparatus 40-1 has been calibrated, preferably for a plurality of different combinations of the material of the component 32 and a main constituent of the coating 50.

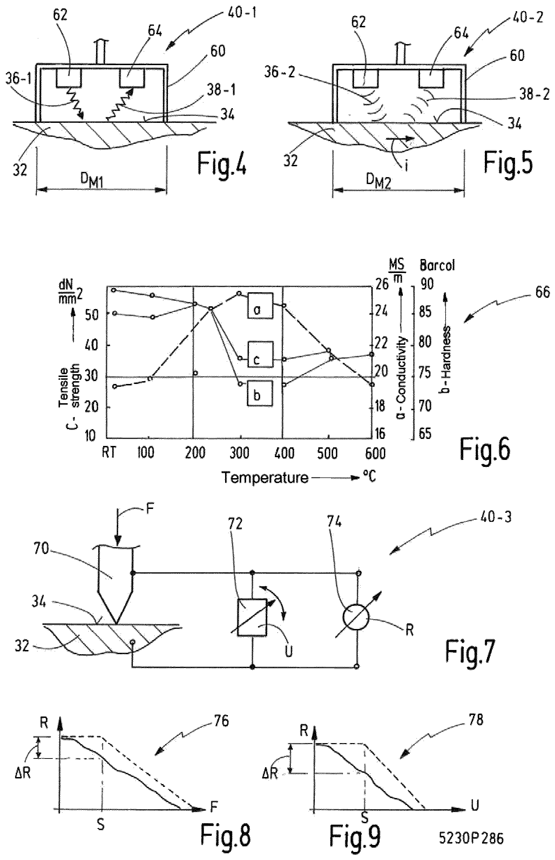

Fig 4 is a schematic view of a detection apparatus 40-1 which contains, in a measurement probe or in a probe housing 60, a generator 62 for generating generator radiation 36-1 and a sensor 64 for detecting reaction radiation 38-1.

The diameter of the measurement probe 60 is indicated in Fig. 4 by D_{M1} and is preferably in a range of from 8 mm to 40 mm.

Fig. 5 shows a comparable example not covered by the invention of a detection apparatus 40-2 in the form of a conductivity measurement apparatus.

Here, a generator 62 for generating an electromagnetic field, in particular an alternating magnetic field, is arranged in a measurement probe 60. In this case, the measurement probe 60 also contains a sensor 64 for detecting a reaction field.

The material of the component 32 is, in the present case, preferably a nonmagnetisable material. Consequently, on account of the alternating magnetic field 36-2, eddy currents i are induced in the material of the component 32, which in turn lead to the reaction field 38-2.

Detecting the reaction field 38-2 makes it possible to draw conclusions as to the conductivity of the component 32 in the region of the joining surface 34.

Fig. 6 shows, by way of example, a graph 66 in which the conductivity a (measured in MS/m), a hardness b (measured in Barcol) and a tensile strength c (measured in dN/mm²) are shown in relation to temperature, namely for an example material of the component 32.

Certain conclusions can be drawn from such a graph 66, if the conductivity is known, which can for example be detected by the detection apparatus 40-2 from Fig. 5.

The detection apparatus 40-2 from Fig. 5 is also preferably a calibrated detection apparatus, by means of which the previous, various reference joining surfaces 34 have been detected, the measurement values of which are compared with measurement values of current joining surfaces.

Fig. 7 shows an example not covered by the present invention of a detection apparatus 40-3 in the form of a contact resistance measurement apparatus.

Here, the detection apparatus 40-3 comprises a contact probe 70, which can be pressed by means of a force F onto the joining surface 34.

In addition, a potential in the form of a voltage U can be applied at the contact probe 70, which voltage can be adjusted. In the case of reference sign 74, a resistance between the contact probe 70 and the component 32 can be measured.

In the case of the contact resistance measurement, the contact probe 70 is either pushed gradually towards the joining surface 34 by means of an ever-increasing force, and/or the voltage U is gradually increased.

The first case results in a graph 76, as shown in Fig. 8. As the force F increases, the resistance R decreases. When a threshold value S is reached (corresponding to a resistance difference ΔR) it can be seen, for the solid line, that said line relates to a component 32 without or having only minor coatings. The dashed line in Fig. 8 shows the case in which a coating is present on the joining surface 34. As a result, even as the force increases, the resistance R remains largely constant up to a threshold value S, and then decreases abruptly. It can be seen here that a coating having a specific thickness that can depend on the value of S is present on the joining surface 34.

The corresponding graph 78 in Fig. 9 shows the alternative or additional variant in which the voltage U is increased gradually. In this case, too, the resistance R increases gradually. A resistance difference ΔR is in turn correlated with a threshold value S. In this case, too, if a coating is present the resistance R remains largely constant up to such a threshold value S, and then decreases rapidly.

In an example not covered by the present invention, a laser measurement apparatus can also be used to identify the surface condition on the first and/or on the second joining surface upon similar principle than the other measurement apparatus described above. The reaction radiation 38 to an excitation radiation 36 is measured and can be compared to a target figure, thus allowing a diagnostic of the surface condition to determine the correct procedure to be implemented before and/or during the joining step.

## Claims

1. Joining device (10) for joining joining elements (24) to components (32) comprising a joining head (12) on which a retaining apparatus (22) for retaining a joining element to be joined to the component (32) is arranged such that a first joining surface (30) of the joining element (24) can be aligned on a second joining surface (34) of the component (32),
**characterised in that**
the joining device (10) further comprises an apparatus (40) for detecting a state of the first and/or the second joining surface (30, 34) consisting in a fluorescence measurement apparatus (40-1), wherein the fluorescence measurement apparatus (40-1) is either a measurement probe or a probe housing (60) arranged on the joining head (12), wherein the measurement apparatus comprises a generator (62) for generating generator radiation (36-1) and a sensor (64) for detecting reaction radiation (38-1).

2. Device according to claim 1, wherein the generator (62) generates LED or laser radiations.

3. Device according to claim 1 or 2, wherein the generator (62) and the sensor (64) are housed in a measurement probe (60), the diameter (D_{M}) of which is preferably in a range of from 7 mm to 50 mm, in particular in a range of from 8 mm to 40 mm.

4. Method of joining joining elements (24) to components (32), in particular for stud welding, being **characterised by** the steps of:
- providing a joining device according to any of claims 1 to 3, providing a joining element (24) having a first joining surface (30), and providing a component (32) having a second joining surface (34);
- preparing the first and/or the second joining surface (30, 34), wherein the preparation step includes detecting the state of the first and/or the second joining surface (30, 34);
- joining the joining element (24) to the component (32);
wherein the preparation step includes carrying out at a detection methods on the first and/or on the second joining surface (30, 34) consisting in a fluorescence measurement on the joining surface (30, 34).

5. Method according to claim 4, wherein the fluorescence measurement includes supplying the joining surface (30, 34) with electromagnetic generator radiation (36-1) by means of the generator (62), such that the material(s) of a coating (50) on the joining surface (30, 34) is/are atomically excited, wherein an emission of response radiation (38-1), released on the basis of said material, in particular the emission of light quantums, is detected by means of the sensor (64).

6. Method according to any of claims 4 to 5, wherein the preparation step is carried out within a timeframe of no less than 0.1 s, and no greater than 2 s.

## Patentansprüche

1. Verbindungsvorrichtung (10) zum Verbinden von Verbindungselementen (24) mit Bauteilen (32), die einen Verbindungskopf (12) umfassen, an dem eine Halteeinrichtung (22) zum Halten eines mit dem Bauteil (32) zu verbindenden Verbindungselementes derart angeordnet ist, dass eine erste Verbindungsfläche (30) des Verbindungselementes (24) auf eine zweite Verbindungsfläche (34) des Bauteils (32) ausgerichtet werden kann,
**dadurch gekennzeichnet, dass**
die Verbindungsvorrichtung (10) weiter eine Einrichtung (40) zum Erfassen eines Zustandes der ersten und/oder der zweiten Verbindungsfläche (30, 34) umfasst, die aus einer Fluoreszenzmesseinrichtung (40-1) besteht, wobei die Fluoreszenzmesseinrichtung (40-1) entweder eine Messsonde oder ein am Verbindungskopf (12) angeordnetes Sondengehäuse (60) ist, wobei die Messeinrichtung einen Generator (62) zur Erzeugung von Generatorstrahlung (36-1) und einen Sensor (64) zur Erfassung von Reaktionsstrahlung (38-1) umfasst.

2. Vorrichtung nach Anspruch 1, wobei der Generator (62) LED- oder Laser-Strahlung erzeugt.

3. Vorrichtung nach Anspruch 1 oder 2, wobei der Generator (62) und der Sensor (64) in einer Messsonde (60) untergebracht sind, deren Durchmesser (DM) bevorzugt in einem Bereich von 7 mm bis 50 mm, insbesondere in einem Bereich von 8 mm bis 40 mm liegt.

4. Verfahren zum Verbinden von Verbindungselementen (24) mit Bauteilen (32), insbesondere zum Bolzenschweißen,
**gekennzeichnet durch** die folgenden Schritte:
- Bereitstellen einer Verbindungsvorrichtung nach einem der Ansprüche 1 bis 3, Bereitstellen eines Verbindungselements (24), das eine erste Verbindungsfläche (30) aufweist und Bereitstellen eines Bauteils (32), das eine zweite Verbindungsfläche (34) aufweist;
- Vorbereiten der ersten und/oder der zweiten Verbindungsfläche (30, 34), wobei der Vorbereitungsschritt das Erfassen des Zustands der ersten und/oder der zweiten Verbindungsfläche (30, 34) einschließt;
- Verbinden des Verbindungselements (24) mit dem Bauteil (32);
wobei der Vorbereitungsschritt die Durchführung eines Erfassungsverfahrens auf der ersten und/oder der zweiten Verbindungsfläche (30, 34) einschließt, das aus einer Fluoreszenzmessung auf der Verbindungsfläche (30, 34) besteht.

5. Verfahren nach Anspruch 4, wobei die Fluoreszenzmessung das Beaufschlagen der Verbindungsfläche (30, 34) mit elektromagnetischer Generatorstrahlung (36-1) mittels des Generators (62) einschließt, so dass das/die Material(ien) einer Beschichtung (50) auf der Verbindungsfläche (30, 34) atomar angeregt wird/werden, wobei eine von diesem Material ausgehende Emission von Antwortstrahlung (38-1), insbesondere die Emission von Lichtquanten, mittels des Sensors (64) erfasst wird.

6. Verfahren nach einem der Ansprüche 4 bis 5, wobei der Vorbereitungsschritt innerhalb eines Zeitrahmens von nicht weniger als 0,1 s und nicht mehr als 2 s durchgeführt wird.

## Revendications

1. Dispositif d'assemblage (10) destiné à assembler des éléments d'assemblage (24) à des composants (32) comprenant une tête d'assemblage (12) sur laquelle un appareil de retenue (22) destiné à retenir un élément d'assemblage à assembler au composant (32) est agencé de telle sorte qu'une première surface d'assemblage (30) de l'élément d'assemblage (24) peut être alignée sur une seconde surface d'assemblage (34) du composant (32),
**caractérisé en ce que**
le dispositif d'assemblage (10) comprend en outre un appareil (40) destiné à détecter un état de la première et/ou de la seconde surface d'assemblage (30, 34) consistant en un appareil de mesure de fluorescence (40-1), dans lequel l'appareil de mesure de fluorescence (40-1) est soit une sonde de mesure soit un boîtier de sonde (60) agencé sur la tête d'assemblage (12), dans lequel l'appareil de mesure comprend un générateur (62) destiné à générer un rayonnement générateur (36-1) et un capteur (64) destiné à détecter un rayonnement de réaction (38-1).

2. Dispositif selon la revendication 1, dans lequel le générateur (62) génère des rayonnement à LED ou laser.

3. Dispositif selon la revendication 1 ou 2, dans lequel le générateur (62) et le capteur (64) sont logés dans une sonde de mesure (60), dont le diamètre (D_{M}) est de préférence dans une plage de 7 mm à 50 mm, en particulier dans une plage de 8 mm à 40 mm.

4. Procédé d'assemblage d'éléments d'assemblage (24) à des composants (32), en particulier pour soudage des goujons,
étant **caractérisé par** les étapes consistant à :
- fournir un dispositif d'assemblage selon l'une quelconque des revendications 1 à 3, fournir un élément d'assemblage (24) présentant une première surface d'assemblage (30), et fournir un composant (32) présentant une seconde surface d'assemblage (34) ;
- préparer la première et/ou la seconde surface d'assemblage (30, 34), dans lequel l'étape de préparation inclut la détection de l'état de la première et/ou de la seconde surface d'assemblage (30, 34) ;
- assembler l'élément d'assemblage (24) au composant (32) ;
dans lequel l'étape de préparation inclut la réalisation, lors d'une détection, de procédés sur la première et/ou la seconde surface d'assemblage (30, 34) consistant à une mesure de fluorescence sur la surface d'assemblage (30, 34).

5. Procédé selon la revendication 4, dans lequel la mesure de fluorescence inclut l'apport à la surface d'assemblage (30, 34) d'un rayonnement générateur électromagnétique (36-1) à l'aide du générateur (62), de telle sorte que le(s) matériau(x) d'un revêtement (50) sur la surface d'assemblage (30, 34) est/sont atomiquement excités, dans lequel une émission de rayonnement de réponse (38-1), libérée sur la base dudit matériau, en particulier l'émission de quantums lumineux, est détectée à l'aide du capteur (64).

6. Procédé selon l'une quelconque des revendications 4 à 5, dans lequel l'étape de préparation est réalisée dans un délai de pas moins de 0,1 s et de pas plus de 2 s.
